# FASCICULE DE BREVET EUROPEEN

(11) **EP 3 899 598 B1**
(45) Date de publication et mention de la délivrance du brevet: **14.05.2025**
(21) Numéro de dépôt: 19845706.1
(22) Date de dépôt: 17.12.2019
(51) Int. Cl.: G01V 8/12, G01V 8/14, G01N 21/90, B29C 49/78

(54) **DISPOSITIF DE DÉTECTION OPTIQUE D'UN DÉFAUT DE POSITIONNEMENT OU DE FORME D'UN CORPS CREUX DANS UN CONVOYEUR D'UNE UNITÉ DE CONDITIONNEMENT THERMIQUE**
VORRICHTUNG ZUR OPTISCHEN ERFASSUNG EINES POSITIONIERUNGS- ODER FORMDEFEKTS EINES HOHLKÖRPERS IN EINEM FÖRDERER EINER THERMISCHEN AUFBEREITUNGSANLAGE
DEVICE FOR OPTICALLY DETECTING A POSITIONING OR SHAPE DEFECT OF A HOLLOW BODY IN A CONVEYOR OF A THERMAL CONDITIONING UNIT

(30) Priorité: 17.12.2018 FR 1873042
(43) Date de publication de la demande: 27.10.2021
(73) Titulaire: Sidel Participations, 76930 Octeville-sur-Mer (FR)
(72) Inventeur: MOULIN, Sébastien, 76930 Octeville-sur-mer (FR); LAHOGUE, Yoann, 76930 Octeville-sur-mer (FR); FEUILLOLEY, Guy, 76930 Octeville-sur-mer (FR)
(74) Mandataire: Sidel Group
(86) Numéro de dépôt international: PCT/FR2019/053111
(87) Numéro de publication internationale: WO 2020/128295

(56) Documents cités:
- EP-A1- 0 380 408
- WO-A1-2012/070258
- CH-A- 424 283
- US-A- 3 968 368
- US-A- 4 107 523
- US-A- 4 411 522
- US-A- 5 389 790

## Description

L'invention a trait au contrôle automatisé du transport de corps creux par un convoyeur.

Elle concerne plus précisément un dispositif de détection d'un défaut de positionnement d'un corps creux parcourant un trajet rectiligne défini par un convoyeur de corps creux.

Ces corps creux sont par exemple des préformes de récipients en matière plastique (par ex. en PET). Une préforme comprend classiquement un corps cylindrique qui se termine par un fond hémisphérique, un col qui présente sa forme finale, et une collerette séparant le col du corps.

Dans une installation de fabrication de récipients à partir de préformes, les préformes brutes d'injection sont ordinairement stockées en vrac dans un conteneur. Les préformes sont d'abord prélevées du conteneur, orientées et ordonnées en ligne pour être introduites dans une unité de conditionnement thermique (plus simplement dénommée « four ») équipée d'émetteurs infrarouge (typiquement sous forme de lampes halogènes tubulaires, ou diode laser), où les corps des préformes sont portés à une température supérieure à leur température de transition vitreuse (laquelle est d'environ 80°C pour le PET). Les préformes chaudes sont alors transférées vers une unité de formage équipée d'une pluralité de moules dans lesquels les préformes sont formées à l'empreinte des récipients par soufflage ou étirage soufflage.

Dans le four, les préformes sont convoyées en ligne au moyen d'une chaîne de transport comprenant une pluralité de maillons chacun un support appelé « tournette », pourvu d'un mandrin monté en translation entre une position inactive et une position active dans laquelle le mandrin vient s'emmancher dans le col d'une préforme.

Au cours de la translation de la chaîne, chaque tournette est entraînée en rotation au moyen d'une crémaillère qui engrène un pignon solidaire du mandrin. De la sorte, la préforme emboîtée sur la tête du mandrin est entraînée à la fois en translation et en rotation dans le four, de manière à être pleinement exposée au rayonnement des émetteurs infrarouge.

La structure d'une telle chaîne de transport est bien décrite dans le brevet européen EP 0 935 572 (Sidel). Cette chaîne est habituellement montée entre deux roues, à savoir une roue motrice, qui entraîne la chaîne, et une roue suiveuse. L'une des roues (par ex. la roue motrice) est placée en amont du four, et l'autre (par ex. la roue suiveuse) en aval de celui-ci.

Dans certaines configurations, la chaîne de transport forme plusieurs trajets parallèles le long desquels les corps creux se subdivisent en plusieurs rangées, cf. par ex. le brevet européen EP 2 623 439 (Sidel).

Les préformes en provenance du conteneur sont chargées sur la roue amont au moyen d'un rail ou d'une roue dentée, chaque préforme venant à l'aplomb d'une tournette dont le mandrin est en position inactive. Au cours de la rotation de la roue amont, le mandrin est déplacé vers sa position active, la tête venant s'emboîter dans le col de la préforme (opération dite de vêtissage), qui se trouve ainsi solidarisée en rotation du mandrin. Dès lors que le pignon vient engrener la crémaillère à l'entrée du four, la préforme est entraînée en rotation.

La cadence de production d'une telle installation est généralement de l'ordre de 50 000 récipients par heure, ce qui correspond à la cadence de défilement des préformes dans le four où la vitesse des préformes sur la roue est de l'ordre de 1 m/s.

A cette vitesse, des problèmes de positionnement peuvent se produire ; de fait, il arrive qu'une préforme ne soit pas correctement centrée par rapport au mandrin, qui ne peut dès lors pas s'emboîter correctement dans le col.

Qu'une préforme soit manquante sur la ligne de production ne pose pas de problème particulier, mais, pour des raisons de sécurité, il est nécessaire de détecter les préformes mal positionnées, de manière à permettre leur éjection du four. Une préforme est mal positionnée sur le mandrin, lorsqu'elle est par exemple décentrée par rapport à l'axe de celui-ci ou emmanchée de manière déviée angulairement par rapport à l'axe du mandrin, et peut générer lors de son déplacement la casse des lampes halogènes tubulaires ou des diodes laser qui sont placées à proximité.

Il est connu notamment du brevet européen EP1781460 (Sidel) d'éjecter une préforme mal positionnée, au moyen d'un dispositif mécanique qui détecte une position du mandrin intermédiaire entre sa position active et sa position inactive, correspondant à un mauvais emmanchement de la tête de mandrin dans le col de la préforme.

Ce dispositif donne satisfaction lorsque (dans la majorité des cas) une préforme est mal positionnée au niveau de la roue, mais il ne permet de détecter :
- Ni une préforme qui, tout en étant correctement positionnée au niveau de la roue amont, se retrouverait ensuite mal positionnée, par ex. à l'occasion du retournement qui se produit entre la roue amont et la zone de chauffe (où le trajet est rectiligne), typiquement en raison de la force centrifuge accompagnant le retournement ;
- Ni une préforme qui, tout en étant correctement positionnée, présenterait un défaut de forme (par ex. en raison d'un écrasement).

CH424283 décrit un dispositif pour tester des objets en verre, en particulier de la verrerie creuse, pour détecter les fissures, la répartition du verre (épaisseur de paroi) et la précision de la forme à l'aide de faisceaux lumineux. Le dispositif est placé au-dessus du trajet de transport de la verrerie.

### Résumé de l'invention:

L'invention vise à proposer une solution permettant de détecter avec une fiabilité accrue un défaut de forme ou de positionnement d'un corps creux (typiquement une préforme) dans un convoyeur.

A cet effet, il est proposé, en premier lieu, un dispositif de détection selon la revendication 1.

Lorsqu'un corps creux présente un défaut de forme ou de positionnement, il s'intercale sur le chemin optique entre le bloc optique et la cible et est frappé par le faisceau laser, ce dont il résulte une détection du défaut de forme ou de positionnement.

Diverses caractéristiques supplémentaires peuvent être prévues, seules ou en combinaison. Ainsi, par exemple :
- Le bloc optique est monté sur un support réglable ;
- Le support comprend une potence incluant un montant et une traverse fixée sur le montant et sur laquelle est montée le bloc optique ;
- Le montant est monté en translation, suivant une direction verticale, par rapport à une applique fixe ;
- Le support comprend une molette de réglage de la position du montant par rapport à l'applique suivant la direction verticale ;
- Le support comprend un levier-frein dont le serrage est propre à assurer le blocage en position du montant par rapport à l'applique ;
- La traverse est montée en translation, par rapport au montant, suivant une direction transversale ;
- La traverse est montée en translation, par rapport au montant, suivant une direction longitudinale ;
- Le support comprend un coulisseau monté en translation, par rapport au montant, suivant la direction transversale, et la traverse est montée en translation, par rapport au coulisseau, suivant la direction longitudinale ;
- Le support comprend une molette de réglage de la position de la traverse par rapport au montant, suivant la direction transversale ;
- Le support comprend un levier-frein dont le serrage est propre à assurer le blocage en position de la traverse suivant la direction transversale ;
- Le support comprend au moins un indicateur de la position du bloc optique ;
- La cible comprend un réflecteur tapissé de prismes ;
- La cible est montée de manière réglable sur un pied.

Selon un mode particulier de réalisation, le dispositif comprend, pour la détection, sur deux trajets rectilignes, d'un défaut de forme ou de positionnement d'un corps creux parcourant l'un au moins de ces trajets :
- Un premier bloc optique intégrant un émetteur produisant un faisceau optique suivant un premier chemin optique dont au moins un segment est orienté parallèlement à un premier trajet ;
- Une première cible positionnée à distance du premier bloc optique, cette première cible étant pourvue d'un capteur photosensible ou d'un réflecteur interceptant le premier chemin optique ;
- Un deuxième bloc optique intégrant un émetteur produisant un faisceau optique suivant un deuxième chemin optique dont au moins un segment est orienté parallèlement à un deuxième trajet ;
- Une deuxième cible positionnée à distance du premier bloc optique, cette première cible étant pourvue d'un capteur photosensible ou d'un réflecteur interceptant le deuxième chemin optique.

D'autres caractéristiques supplémentaires peuvent encore être prévues. Ainsi, par exemple :
- Le bloc optique est positionné dans le prolongement du trajet ;

- La cible est positionnée en regard du bloc optique ;
- Le trajet étant défini entre un point d'entrée et un point de sortie, le bloc optique est positionné au-delà du point de sortie ou du point d'entrée ;
- La cible est positionnée en regard du bloc optique au-delà du point d'entrée ou, respectivement, du point de sortie ;
- Le bloc optique est déporté latéralement du trajet, et le dispositif comprend un renvoi d'angle optique (tel qu'un prisme ou un miroir) positionné pour orienter le segment du chemin optique parallèlement au trajet ;
- Le bloc optique intègre un filtre optique passe-bande ayant une bande passante centrée sur une longueur d'onde prédéterminée.
- L'émetteur produit un faisceau laser.

Il est proposé, en deuxième lieu, un convoyeur d'une unité de conditionnement thermique pour le transport de corps (2) creux, équipé d'un dispositif (23) de détection tel que présenté ci-dessus.

D'autres objets et avantages de l'invention apparaîtront à la lumière de la description d'un mode de réalisation, faite ci-après en référence aux dessins annexés dans lesquels :
[Fig. 1] est une vue en perspective montrant une unité de conditionnement thermique de préformes, équipée d'un dispositif de détection selon l'invention, avec, dans le médaillon du haut, un détail à plus grande échelle centré sur la zone où est positionné le bloc optique et, dans le médaillon du bas, un détail à plus grande échelle centré sur la zone où est positionnée la cible ;
[Fig. 2] est une vue de détail en perspective montrant le dispositif de détection en fonctionnement, lorsque les corps creux sont conformes à la normale en forme et en positionnement ;

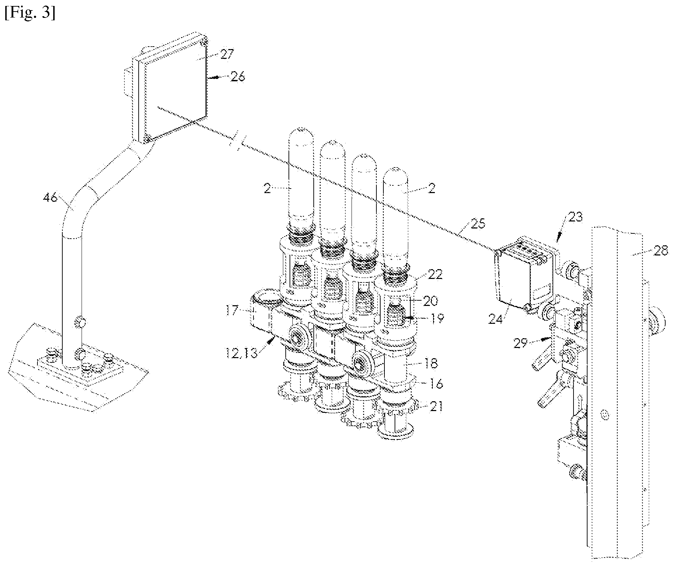

[Fig. 3] est une vue de détail en perspective du dispositif de la figure 2, suivant un autre angle de vue ;
[Fig. 4] est une vue de détail en perspective, à plus grande échelle, du bloc optique du dispositif de détection tel qu'illustré sur la figure 2 ;
[Fig. 5] est une vue de détail en perspective du bloc optique de la figure.4, suivant un autre angle de vue ;
[Fig. 6] est une vue similaire à la figure 2, montrant le dispositif de détection en fonctionnement, lorsqu'un corps creux présente un défaut de forme ou de positionnement ;
[Fig. 7] est une vue schématique faite dans l'axe du bloc optique, et illustrant le fonctionnement de celui-ci.

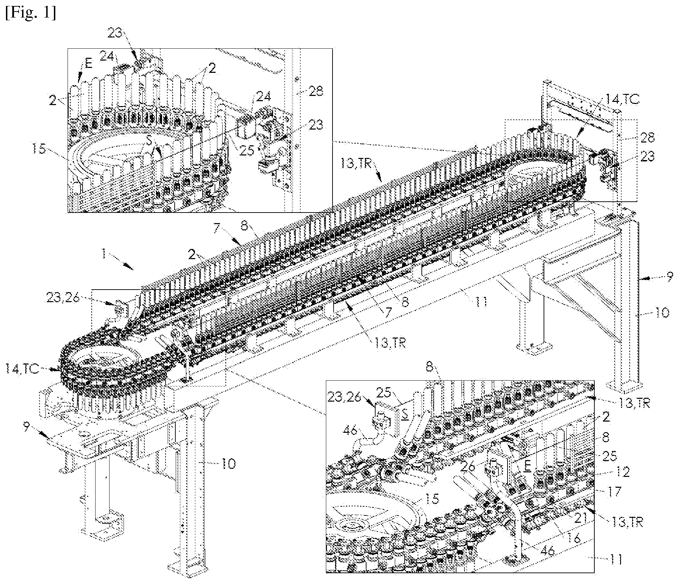

Sur la figure 1 est représentée un convoyeur **1** configuré pour assurer le transport de corps **2** creux. Dans l'exemple illustré, les corps **2** creux sont des préformes, à partir desquelles doivent être formés (par soufflage ou étirage soufflage) des récipients. Certes, les corps **2** creux pourraient être différents : il pourrait s'agir de paraisons, voire même de récipients. Dans ce qui suit, on suppose toutefois que les corps **2** creux sont des préformes, qui sont avantageusement réalisées dans une matière plastique (typiquement en PET).

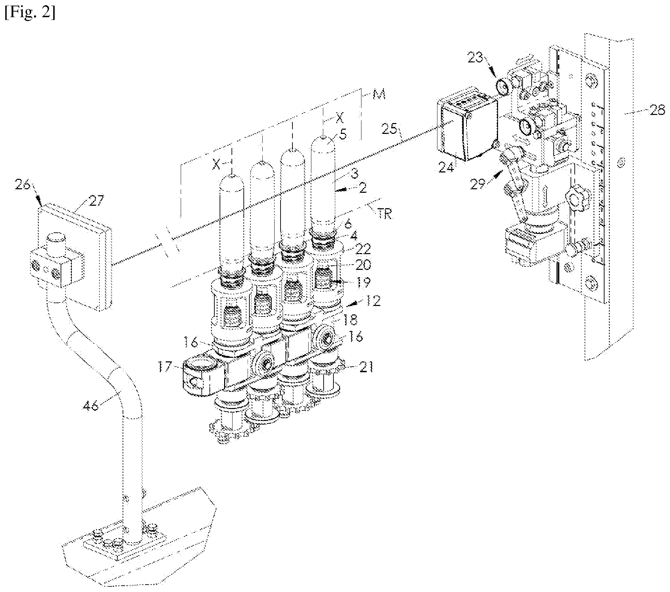

Chaque préforme **2** (cf. notamment la figure **2**) comprend un corps **3** cylindrique, qui s'étend selon un axe **X** principal, un col **4** ouvert qui s'étend à partir d'une première extrémité du corps **3,** et un fond 5 hémisphérique qui s'étend à l'autre extrémité du corps **3.** Dans l'exemple illustré, la préforme **2** comprend une collerette **6** qui sépare le corps **3** du col **4.** On note **R** la demi-largeur d'une préforme **2,** mesurée entre l'axe **X** principal et la périphérie du corps **3.** Lorsque, comme dans l'exemple illustré, le corps **3** est cylindrique de révolution, la demi-largeur **R** désigne le rayon du corps **3.**

Le convoyeur **1** est ici prévu pour transporter au défilé les préformes **2** dans une unité **7** de conditionnement thermique, également appelée four, qui comprend une ou plusieurs parois **8** rayonnantes (deux dans l'exemple illustré) chacune équipée d'une ou plusieurs rangées de sources de rayonnement infrarouge, ici sous forme de lampes (par ex. halogènes) tubulaires.

Dans le four **7,** les corps des préformes **2** sont exposés au rayonnement des parois **8** pour être chauffés à une température supérieure à leur température de transition vitreuse (d'environ 80°Cdans le cas du PET), en vue d'être ensuite conformées en récipients au sein d'une unité de formage (non représentée) équipée d'une pluralité de moules à l'empreinte d'un modèle donné de récipient.

Le convoyeur **1** comprend, en premier lieu, un bâti **9** fixe. Dans l'exemple illustré, le bâti **9** comprend une paire de piétements **10** et une ou plusieurs poutres **11** reliant les piétements.

Le convoyeur **1** comprend, en second lieu, une chaîne **12** de transport qui définit un parcours prédéfini le long duquel les préformes **2** sont déplacées. Ce parcours s'étend en boucle fermée. Dans l'exemple illustré, le parcours comprend deux trajets **TR** rectilignes reliés par des trajets **TC** curvilignes (en l'espèce circulaires). Dans une variante non illustrée, le parcours comprend un unique trajet **TR** rectiligne. Dans une autre variante non illustrée, le parcours comprend deux trajets **TR** rectilignes voisins rapprochés, sur lequel les préformes **2** sont déplacées sur deux rangées parallèles, comme dans la configuration décrite dans le brevet EP 2 623 439 (Sidel).

Pour en revenir à l'exemple illustré, la chaîne **12,** dont une partie seulement est représentée sur les dessins, comprend deux brins rectilignes **13** qui définissent chacun un trajet **TR** rectiligne, et deux brins **14** en arc de cercle qui définissent les trajets **TC** curvilignes. Dans ses brins **14** curvilignes, la chaîne **12** circule sur des roues **15** dont l'une au moins est motorisée. Chaque trajet **TR** rectiligne définit une direction longitudinale de déplacement et s'étend entre un point **E** d'entrée et un point **S** de sortie.

La chaîne **12** comprend une pluralité de maillons **16** articulés les uns par rapport aux autres au moyen d'attelages **17.**

Chaque maillon **16** porte au moins un fourreau **18** et un support **19** pour une préforme **2.** Ce support **19,** ci-après appelé tournette en raison de son caractère rotatif, est pourvu :
- D'un mandrin **20** monté en pivot glissant par rapport au fourreau **18** et dont une extrémité forme un nez propre à être emboîté dans le col **4** d'une préforme,
- D'un pignon **21** solidaire en rotation du mandrin **20,** qui engrène une crémaillère fixe (non visible sur la figure **1** car cachée par la chaîne **12**).

Chaque maillon **16** porte en outre un éjecteur **22** solidaire du fourreau **18.**

Lorsqu'une préforme **2** est montée sur une tournette **19,** la préforme **2** est entraînée en rotation par celle-ci, de sorte que toute la surface de son corps **3** se trouve exposée au rayonnement de la (ou de chaque) paroi **8.**

Chaque tournette **19** est montée en translation par rapport au fourreau **18** entre une position déployée, dans laquelle le mandrin **20** fait saillie de l'éjecteur **22** pour venir s'emmancher dans le col **4** d'une préforme **2** (opération dite de vêtissage), et une position rétractée dans laquelle le mandrin **20** est logé dans l'éjecteur **20** pour s'extraire du col **4** qui vient buter contre l'éjecteur **22** (opération dite de dévêtissage).

Le vêtissage et le dévêtissage sont effectués le long d'un trajet **TC** curviligne, à la périphérie de l'une des roues **15** (celle de gauche sur la figure 1). Lors de ces opérations, les préformes **2** sont orientées col **4** en haut. Après le vêtissage, les préformes **2** subissent un retournement pour être orientées col **4** en bas avant d'être introduites dans le four **7.** A la sortie du four **7** (et donc au terme du conditionnement thermique), les préformes **2** sont à nouveau retournées pour être évacuées du convoyeur **1** et transférées vers l'unité de formage.

Dans les trajets **TR** rectilignes du parcours, les axes **X** principaux des préformes **2** positionnées nominalement (c'est-à-dire verticalement, en l'absence de défaut de forme ou de positionnement) balayent un plan **M** médian qui s'étend à la fois verticalement et longitudinalement.

Dans l'exemple illustré, le point **E** d'entrée et le point **S** de sortie sont les points d'extrémité du trajet **TR** rectiligne où les axes **X** principaux des préformes **2** s'écartent du plan **M** médian (ou le rejoignent), soit lorsque les préformes entrent dans un trajet **TC** curviligne (ou en sortent), soit lorsqu'elles sont retournées.

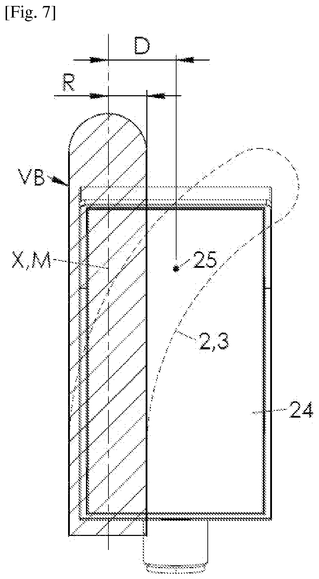

En parcourant le trajet **TR** rectiligne, les corps **3** des préformes **2** balayent un volume **VB** (hachuré sur la figure **7**), symétrique par rapport au plan **M** médian et dont la demi-largeur, mesurée transversalement (c'est-à-dire perpendiculairement au plan **M** média) est égale à la demi-largeur **R** des préformes.

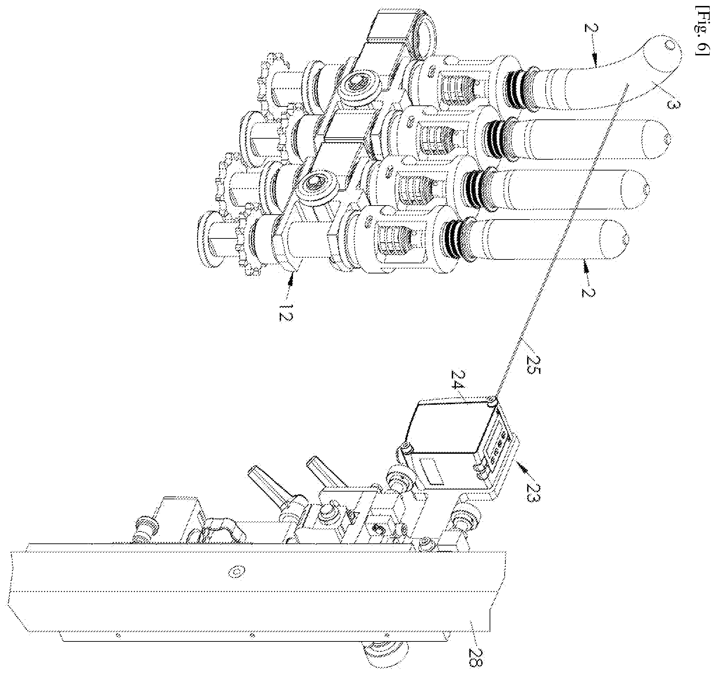

Cependant il peut arriver qu'une préforme **2** présente :
- Un défaut de positionnement, typiquement lorsque le vêtissage ne s'est pas réalisé correctement, ou
- Un défaut de forme (comme illustré sur la figure **6** et en pointillés sur la figure **7**), par ex. lorsque la préforme **2** a subi une déformation due notamment à une mauvaise injection, un choc ou encore un écrasement.

Dans ce cas, il convient de la détecter en vue de l'éjecter.

A cet effet, le convoyeur **1** est équipé d'un dispositif **23** de détection, configuré pour détecter de manière optique, sur l'un et/ou l'autre des trajets **TR** rectilignes, un défaut de forme ou de positionnement d'une préforme **2** parcourant ce(s) trajet(s) **TR.**

Le dispositif **23** de détection comprend, premièrement, un bloc **24** optique.

Ce bloc **24** intègre un émetteur qui produit un faisceau **25** optique (avantageusement collimaté) suivant un chemin optique dont au moins un segment (ou une portion) est orienté parallèlement au trajet **TR** rectiligne, de telle sorte que ce segment (et donc, au moins localement, le faisceau **25**) est décalé latéralement, par rapport au plan **M** médian, d'une distance **D** supérieure à la demi-largeur **R** des préformes **2** (c'est-à-dire à la demi-largeur du volume **VB** balayé par les préformes **2** dont la forme et le positionnement sont nominaux) et inférieurs à deux fois la largeur R des préformes qui correspond normalement à la position de la paroi rayonnante. En d'autres termes, le faisceau 25 optique peut avantageusement être positionné entre la paroi de la préforme et la paroi rayonnante. Dans le cas où le faisceau 25 optique se positionne sur la paroi du corps creux ou sur la paroi rayonnante alors aucune détection de défaut est possible.

Autrement dit, la distance du faisceau au plan médian balayé le long du trajet rectiligne par les axes (**X**) des préformes est avantageusement strictement supérieure à la demi largeur maximum du corps creux et/ou strictement situé à l'intérieur d'un espace s'étendant entre la paroi rayonnante latérale et la paroi de la préforme.

Dans un premier mode de réalisation, le faisceau **25** optique est de préférence un laser, c'est-à-dire un faisceau optique intense collimaté dont la bande passante optique est étroite. Toutefois, dans un deuxième mode de réalisation, il pourrait s'agir d'un faisceau optique de plus large bande passante optique. Dans ce deuxième mode de réalisation, le bloc optique intègrerait un filtre optique passe-bande ayant une bande passante centrée sur une longueur d'onde prédéterminée. Quel que soit le mode de réalisation retenu, il convient de choisir la longueur d'onde ou, respectivement, la bande passante, de sorte que les longueurs d'onde du rayonnement émis par les préformes **2** ne génèrent pas d'interférence avec le faisceau, pour éviter toute erreur de détection.

Dans ce qui suit, on se place dans le premier mode de réalisation, et on suppose par conséquent que le faisceau **25** optique est un laser, sans que cette supposition n'exclue l'autre mode de réalisation.

Comme illustré dans le médaillon de détail de la figure 1, le décalage du chemin optique est réalisé vers l'extérieur du trajet **TR,** c'est-à-dire du côté opposé à la (aux) trajectoire(s) **TC** curviligne(s), afin d'éviter que les préformes **2** qui circulent de manière nominale sur le(s) trajet(s) curviligne(s) ne coupent le faisceau **25.**

Le dispositif **23** de détection comprend, deuxièmement, une cible **26** positionnée à distance du bloc **24** optique.

La cible **26** est pourvue :
- Soit (premier cas) d'un capteur photosensible interceptant le chemin optique du faisceau **25** et propre à en détecter l'impact,
- Soit (deuxième cas, illustré) d'un réflecteur **27** interceptant le chemin optique du faisceau **25** et propre à le réfléchir vers un récepteur optique intégré au bloc **24** optique.

Dans le premier cas, le dispositif **23** de détection peut fonctionner en tout ou rien, c'est-à-dire que :
- Tant que le capteur photosensible équipant la cible **26** est excité, ce qui témoigne de ce que le faisceau **25** lui parvient sans encombre, il produit un premier signal caractéristique d'un fonctionnement nominal du convoyeur **1,** où les préformes **2** sont toutes conformes ;
- Dès lors, en revanche, que le capteur photosensible équipant la cible **26** n'est plus excité, ce qui témoigne de ce qu'un obstacle est interposé sur le chemin optique entre lui et l'émetteur, il produit un deuxième signal caractéristique d'un fonctionnement dégradé où l'une au moins des préformes **2** présente un défaut de forme ou de positionnement.

Ce premier cas est efficace pour détecter un défaut de forme ou de positionnement d'une préforme **2,** mais il ne permet pas de la localiser pour pouvoir l'éjecter sans arrêter le convoyeur **1.** Pour permettre le retrait (manuel) de la préforme **2** concernée, il convient par conséquent de stopper le convoyeur **1.**

Dans le deuxième cas, le dispositif **23** de détection permet de procéder à une mesure de distance. Le bloc **24** optique, qui est équipé à la fois d'un émetteur et d'un récepteur, est configuré pour mesurer par triangulation la longueur du chemin optique effectivement parcouru par le faisceau **25** laser :
- Tant que la longueur mesurée du chemin optique est égale à une valeur standard prédéterminée (correspondant grossièrement au double de la distance séparant le bloc **24** optique du réflecteur **27**), le bloc **24** produit un premier signal caractéristique d'un fonctionnement nominal où les préformes **2** sont toutes conformes ;
- Dès lors, en revanche, que la longueur mesurée du chemin optique est inférieure à la valeur standard, ce qui trahit la présence d'une préforme **2** qui, ayant un défaut de forme ou de positionnement, vient couper le faisceau **25,** le bloc **24** optique produit un deuxième signal caractéristique d'un fonctionnement dégradé où l'une au moins des préformes **2** présente un défaut de forme ou de positionnement. Comme la distance (le long du chemin optique) du bloc **24** optique à la préforme **2** concernée peut être mesurée, un calculateur peut localiser précisément la préforme **2** et, en tenant compte de sa vitesse (connue) de déplacement, commander son éjection lorsqu'elle parvient dans une zone du convoyeur **1** où est implanté un système d'éjection.

Le bloc **24** optique est par ex. du type (à émetteur et récepteur) commercialisé par la société Sick sous la référence Dx50. Selon un mode préféré de réalisation, le réflecteur **27** est tapissé de prismes, ce qui améliore la qualité du signal optique capté par le récepteur équipant le bloc **24** optique. Ainsi, le réflecteur est par ex. du type commercialisé par la société SICK sous la référence PL100.

Dans la configuration illustrée, où le chemin optique est rectiligne, le (ou chaque) bloc **24** est positionné dans le prolongement du trajet **TR** rectiligne au-delà du point **S** de sortie (ou, en variante, au-delà du point E d'entrée). Dans cette même configuration, la (ou chaque) cible **26** est positionnée dans le prolongement du trajet **TR** rectiligne au-delà du point **E** d'entrée (ou, respectivement, au-delà du point **S** de sortie lorsque le bloc **24** optique est positionné au-delà du point **E** d'entrée). Dans cette configuration, la (ou chaque) cible **26** est positionnée en regard du bloc **24** optique correspondant.

En variante, le (ou chaque) bloc **24** optique peut être déporté latéralement du trajet **TR** des préformes. Dans ce cas, le dispositif **23** comprend un renvoi d'angle optique (tel qu'un prisme ou un miroir) positionné pour orienter le segment du chemin optique parallèlement au trajet **TR.**

Lorsque le parcours des préformes **2** comprend deux trajets **TR** rectilignes, le dispositif **23** comprend, pour la détection sur ces deux trajets, d'un défaut de forme ou de positionnement d'une préforme **2** parcourant l'un au moins de ces trajets :
- Un premier bloc **24** optique intégrant un émetteur produisant un faisceau **25** suivant un premier chemin optique dont au moins un segment est orienté parallèlement à un premier trajet **TR** ;
- Une première cible **26** positionnée à distance du premier bloc **24** optique, cette première cible **26** étant pourvue d'un capteur photosensible ou d'un réflecteur **27** interceptant le premier chemin optique ;
- Un deuxième bloc **24** optique intégrant un émetteur produisant un faisceau **25** suivant un deuxième chemin optique dont au moins un segment est orienté parallèlement à un deuxième trajet **TR** ;
- Une deuxième cible **26** positionnée à distance du premier bloc **24** optique, cette première cible **26** étant pourvue d'un capteur photosensible ou d'un réflecteur **27** interceptant le deuxième chemin optique.

Quel que soit le mode de réalisation retenu, le (ou chaque) bloc **24** otique est avantageusement monté sur le bâti **9** du convoyeur **1.** Plus précisément, et comme illustré sur les dessins, le bloc **24** optique est monté sur un poteau **28** solidaire d'un piétement **10.**

Comme la taille (notamment la demi-largeur **R,** mais aussi éventuellement la hauteur) des préformes **2** peut varier d'une gamme à une autre selon le modèle de récipient à fabriquer, il est préférable de pouvoir régler en conséquence au moins la position du bloc **24** optique (et, le cas échéant, la position de la cible **26**).

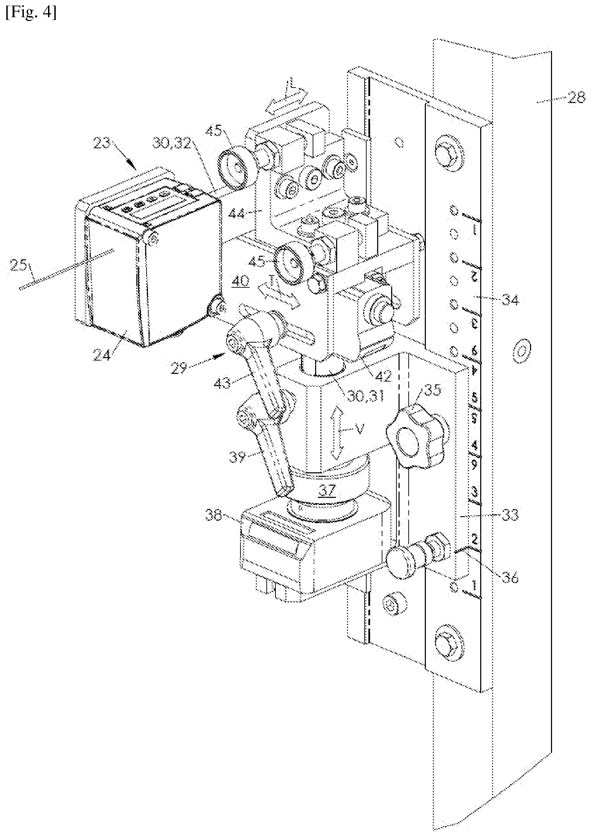

C'est pourquoi, dans l'exemple illustré, le bloc **24** optique est monté sur un support **29** réglable. Comme on le voit notamment sur la figure **4****,** ce support **29** est à son tour fixé sur le poteau **28.**

Selon un mode de réalisation, le support **29** comprend une potence **30.** La potence **30** comprend un montant **31** et une traverse **32.** La traverse **32** est fixée sur le montant **30.** Le bloc **24** optique est monté sur la traverse **32.**

Le montant **31** s'étend verticalement ; la traverse **32** s'étend longitudinalement. Le bloc **24** optique est monté à une extrémité de la traverse **32,** par ex. par vissage.

Dans l'exemple illustré notamment sur la figure **4****,** le support **29** comprend une applique **33** par l'intermédiaire de laquelle le montant **31** est solidaire du poteau **28.** Le montant **31** est ici monté en translation, suivant une direction verticale (représentée par la flèche **V** sur la figure **4**) par rapport à l'applique **33.** L'applique est fixe ; cependant elle peut être fixée sur le poteau **28** à différentes hauteurs prédéterminées. A cet effet, et comme illustré sur la figure **2****,** une platine **34** graduée peut être interposée entre l'applique **33** et le poteau **28.**

La fixation de l'applique **33** sur la platine **34** (ou sur le poteau **28** au travers de la platine **34**) peut être réalisée au moyen d'un écrou **35** (par ex. un écrou étoilé), tandis qu'un index **36** (ici sous forme d'un trait gravé dans un chant de l'applique **33**) indique la hauteur de fixation de l'applique par coopération avec la graduation de la platine **34.**

Comme on le voit notamment sur la figure **4****,** le support **29** comprend avantageusement une molette **37** de réglage de la position du montant **31** (et donc de la potence **30**) par rapport à l'applique **33** (et donc par rapport au poteau **28**) suivant la direction **V** verticale. Un indicateur **38** électronique pourvu d'un écran peut être couplé à la molette **37** pour afficher la position verticale du bloc **24** optique.

Le support **29** comprend de préférence un levier-frein **39** dont le serrage est propre à assurer le blocage en position du montant **31** par rapport à l'applique **33.** Comme illustré sur la figure **4****,** le levier-frein **39** est vissé dans l'applique **33** ; il comprend un ergot qui, en position serrée, vient exercer contre le montant **31** un effort localisé de friction pour le bloquer en position.

Le déplacement vertical (par dévissage puis revissage de l'écrou **35**) de l'applique **33** par rapport la platine **34** permet d'effectuer un réglage approximatif de la position verticale du bloc **24** optique. La manœuvre de la molette **37** permet ensuite d'effectuer un réglage fin de la position verticale du bloc **24** optique.

Selon un mode préféré de réalisation, la traverse **32** est montée en translation, par rapport au montant **31,** suivant une direction transversale (cette direction, perpendiculaire au plan **M** médian, est matérialisée sur la figure **4** par la flèche **T**).

A cet effet, dans l'exemple illustré sur la figure **4****,** le support comprend un coulisseau **40** monté en translation par rapport au montant **31** suivant la direction **T** transversale et sur lequel la traverse **32** est fixée.

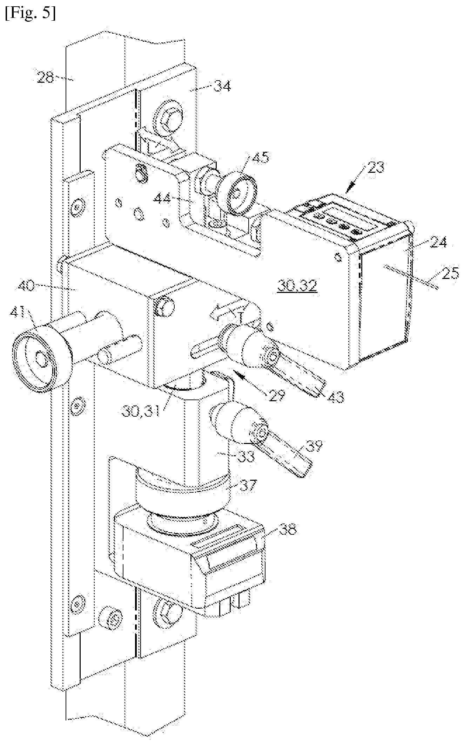

Comme on le voit sur la figure **5****,** le support est avantageusement pourvu d'une molette **41** de réglage de la position du coulisseau **40** (et donc de la traverse **32**) par rapport au montant **31,** suivant la direction **T** transversale. Un indicateur **42** électronique pourvu d'un écran peut être couplé à la molette **41** pour afficher la position transversale du bloc **24** optique.

Le support **29** comprend de préférence un levier-frein **43** dont le serrage est propre à assurer le blocage en position du coulisseau **39** (et donc de la traverse **32**) suivant la direction **T** transversale.

Selon un mode préféré de réalisation, la traverse **32** est en outre montée en translation, par rapport au coulisseau **40,** suivant la direction longitudinale (matérialisée sur la figure **4** par la flèche **L**). Dans l'exemple illustré, la traverse **32** est solidaire d'une équerre **44** montée, avec un degré de liberté en translation longitudinale, sur le coulisseau **40.** Une ou plusieurs molette(s) **45** permettent de régler la position longitudinale de l'équerre **44** (et donc de la traverse **32**) par rapport au coulisseau **40** (et donc par rapport au montant **31,** à l'applique **33** et au poteau **28**).

La cible **26** est avantageusement choisie de dimensions suffisantes pour pouvoir être toujours frappée par le faisceau **25** laser (sauf les cas de préforme **2** mal positionnée ou déformée) ; cependant, il peut être préférable de pouvoir la régler pour garantir qu'elle est bien positionnée en regard du bloc **24** optique.

Ainsi, dans l'exemple illustré, la cible **26** est montée de manière réglable sur un pied **46** lui-même solidaire du bâti **9** (et plus précisément, dans l'exemple illustré, fixé sur une poutre **11**).

Comme on le voit bien sur la figure **2****,** le pied **46** est de préférence tordu, afin de ne pas gêner le retournement des préformes **2** (par rotation des maillons **16**).

Le dispositif **23** de détection qui vient d'être décrit procure les avantages suivants.

Premièrement, il permet de détecter une préforme **2** ayant un défaut de positionnement dans le trajet **TR** rectiligne (même lorsque cette préforme **2** ne présentait pas un tel défaut dans le trajet **TC** curviligne, au niveau de la roue **15**).

Deuxièmement, il permet de détecter une préforme **2** qui, même dans l'hypothèse où elle ne présenterait pas de défaut de positionnement, présente cependant un défaut de forme.

Troisièmement, il permet de réaliser de telles détections sans contact.

Il en résulte une fiabilité accrue du dispositif **23** de détection, notamment par rapport aux dispositifs de détection mécaniques connus.

## Revendications

1. Dispositif (**23**) de détection d'un défaut de forme ou de positionnement d'un corps (**2**) creux pour une unité (7) de conditionnement thermique du corps creux, également appelée four, l'unité (7) comprenant une ou plusieurs parois (8) rayonnantes et un convoyeur (**1**) des corps (**2**) creux définissant au moins un trajet (**TR**) rectiligne, les corps creux parcourant le trajet rectiligne (**TR**) entre un point d'entrée (E) et un point de sortie (S) de l'unité (7) de conditionnement thermique et ayant chacun un axe (**X**) principal, le dispositif (**23**) comprenant :
- un bloc (**24**) optique intégrant un émetteur produisant un faisceau (**25**) optique positionné entre la paroi du corps (2) creux et la paroi rayonnante (8) suivant un chemin optique dont un segment est orienté parallèlement au trajet (**TR**) rectiligne et décalé latéralement, par rapport à un plan (**M**) médian balayé par les axes (**X**) principaux des corps (**2**) creux positionnés nominalement, d'une distance (**D**) supérieure à une demi-largeur (**R**) des corps (**2**) creux et inférieure à deux fois la largeur (R) des corps (2) creux;
- une cible (**26**) positionnée à distance du bloc (**24**) optique, cette cible (**26**) étant pourvue d'un capteur photosensible ou d'un réflecteur (**27**) interceptant le chemin optique du faisceau (**25**) et propre, respectivement, à détecter l'impact de celui-ci ou à le réfléchir vers un récepteur optique intégré au bloc (**24**) optique de telle sorte que, lorsqu'un corps (2) creux présente un défaut de forme ou de positionnement, il s'intercale sur le chemin optique entre le bloc (24) optique et la cible (26) et est frappé par le faisceau (25) optique entre la paroi de corps (2) creux et la paroi rayonnante (8), ce dont il résulte une détection du défaut de forme ou de positionnement.

2. Dispositif (**23**) selon la revendication 1, **caractérisé en ce que** le bloc (**24**) optique est monté sur un support (**29**) réglable.

3. Dispositif (**23**) selon la revendication 2, **caractérisé en ce que** le support (**29**) comprend une potence (**30**) incluant un montant (**31**) et une traverse (**32**) fixée sur le montant (**31**) et sur laquelle est montée le bloc (**24**) optique.

4. Dispositif (**23**) selon la revendication 3, **caractérisé en ce que** le montant (**31**) est monté en translation, suivant une direction (**V**) verticale, par rapport à une applique (**33**) fixe.

5. Dispositif (**23**) selon la revendication 4, **caractérisé en ce que** le support (**29**) comprend une molette (**37**) de réglage de la position du montant (**31**) par rapport à l'applique (**33**) suivant la direction (**V**) verticale.

6. Dispositif (**23**) selon la revendication 5, **caractérisé en ce que** le support (**29**) comprend un levier-frein (**39**) dont le serrage est propre à assurer le blocage en position du montant (**31**) par rapport à l'applique (**33**) suivant la direction (**V**) verticale.

7. Dispositif (**23**) selon l'une des revendications 3 à 6, **caractérisé en ce que** la traverse (**32**) est montée en translation, par rapport au montant (**31**), suivant une direction (**T**) transversale.

8. Dispositif (**23**) selon l'une des revendications 3 à 7, **caractérisé en ce que** la traverse (**32**) est montée en translation, par rapport au montant (**31**), suivant une direction (**L**) longitudinale.

9. Dispositif (**23**) selon les revendications 7 et 8, prises en combinaison, **caractérisé en ce que** le support (**29**) comprend un coulisseau (**40**) monté en translation, par rapport au montant (**31**), suivant la direction (**T**) transversale, et **en ce que** la traverse (**32**) est montée en translation, par rapport au coulisseau (**40**), suivant la direction (**L**) longitudinale.

10. Dispositif (**23**) selon la revendication 7 ou la revendication 9,
**caractérisé en ce que** le support (**29**) comprend une molette (**41**) de réglage de la position de la traverse (**32**) par rapport au montant (**31**), suivant la direction (**T**) transversale ; le support (**29**) comprenant de préférence un levier-frein (**43**) dont le serrage est propre à assurer le blocage en position de la traverse (**32**) suivant la direction (**T**) transversale.

11. Dispositif (**23**) selon l'une des revendications 2 à 10, **caractérisé en ce que** le support (**29**) comprend au moins un indicateur (**38**, **42**) de la position du bloc (**24**) optique.

12. Dispositif (**23**) selon l'une des revendications précédentes,
**caractérisé en ce que** le bloc (**24**) optique est positionné dans le prolongement du trajet (**TR**), la cible (**26**) étant de préférence positionnée en regard du bloc (**24**) optique.

13. Dispositif (**23**) selon la revendication 12, **caractérisé en ce que**, le bloc (**24**) optique est positionné au-delà du point (**S**) de sortie ou du point (**E**) d'entrée ; la cible (**26**) étant de préférence positionnée en regard du bloc (**24**) optique au-delà du point (**E**) d'entrée ou, respectivement, du point (**S**) de sortie.

14. Dispositif (**23**) selon l'une des revendications précédentes,
**caractérisé en ce que** la cible (**26**) comprend un réflecteur (**27**) tapissé de prismes ;
et/ou la cible (**26**) est montée de manière réglable sur un pied (**46**) ;
et/ou le dispositif comprend, pour la détection, sur deux trajets (**TR**) rectilignes, d'un défaut de forme ou de positionnement d'un corps (**2**) creux parcourant l'un au moins de ces trajets (**TR**) :
- un deuxième bloc (**24**) optique intégrant un émetteur produisant un faisceau (**25**) optique suivant un deuxième chemin optique dont au moins un segment est orienté parallèlement à un deuxième trajet (**TR**) ;
- une deuxième cible (**26**) positionnée à distance du premier bloc (**24**) optique, cette première cible (**26**) étant pourvue d'un capteur photosensible ou d'un réflecteur (**27**) interceptant le deuxième chemin optique ;
et/ou le bloc (**24**) optique est déporté latéralement du trajet (**TR**), et le dispositif (**23**) comprend un renvoi d'angle optique positionné pour orienter le segment de chemin optique parallèlement au trajet (**TR**) ;
et/ou le bloc (**24**) optique intègre un filtre optique passe-bande ayant une bande passante centrée sur une longueur d'onde prédéterminée ;
et/ou l'émetteur produit un faisceau (**25**) laser.

15. Convoyeur (**1**) d'une unité (**7**) de conditionnement thermique pour le transport de corps (**2**) creux, équipé d'un dispositif (**23**) de détection selon l'une des revendications précédentes.

## Patentansprüche

1. Vorrichtung (23) zur Erfassung eines Form- oder Positionsfehlers eines Hohlkörpers (2) für eine thermische Aufbereitungsanlage (7) des Hohlkörpers, auch Ofen genannt, wobei die Anlage (7) eine oder mehrere strahlende Wände (8) und einen Förderer (1) für die Hohlkörper (2) aufweist, der mindestens einen geradlinigen Weg (TR) definiert, wobei die Hohlkörper den geradlinigen Weg (TR) zwischen einem Eintrittspunkt (E) und einem Austrittspunkt (S) der thermischen Aufbereitungsanlage (7) durchlaufen und jeweils eine Hauptachse (X) haben, wobei die Vorrichtung (23) Folgendes aufweist:
- einen optischen Block (24), der einen Sender integriert, der einen optischen Strahl (25) erzeugt, der zwischen der Wand des Hohlkörpers (2) und der strahlenden Wand (8) entlang eines optischen Wegs positioniert ist, von dem ein Segment parallel zum geradlinigen Weg (TR) ausgerichtet und in Bezug auf eine Mittelebene (M), die von den Hauptachsen (X) der nominell positionierten Hohlkörper (2) durchlaufen wird, um einen Abstand (D) größer als eine halbe Breite (R) der Hohlkörper (2) und kleiner als die zweifache Breite (R) der Hohlkörper (2)seitlich versetzt ist;
- ein Ziel (26), das in einem Abstand vom optischen Block (24) positioniert ist, wobei dieses Ziel (26) mit einem lichtempfindlichen Sensor oder einem Reflektor (27) versehen ist, der den optischen Weg des Strahls (25) abfängt und geeignet ist, den Aufprall des Strahls zu erfassen bzw. ihn zu einem in den optischen Block (24) integrierten optischen Empfänger zu reflektieren, so dass, wenn ein Hohlkörper (2) einen Form- oder Positionsfehler aufweist, er in den optischen Weg zwischen dem optischen Block (24) und dem Ziel (26) eintritt und von dem optischen Strahl (25) zwischen der Wand des Hohlkörpers (2) und der abstrahlenden Wand (8) getroffen wird, was zu einer Erfassung des Form- oder Positionsfehlers führt.

2. Vorrichtung (23) nach Anspruch 1, **dadurch gekennzeichnet, dass** der optische Block (24) auf einem verstellbaren Träger (29) montiert ist.

3. Vorrichtung (23) nach Anspruch 2, **dadurch gekennzeichnet, dass** der Träger (29) eine Stütze (30) aufweist, die eine senkrechte Strebe (31) und einen Querstrebe (32) einschließt, die an der senkrechten Strebe (31) befestigt ist und auf der der optische Block (24) montiert ist.

4. Vorrichtung (23) nach Anspruch 3, **dadurch gekennzeichnet, dass** die senkrechte Strebe (31) in einer vertikalen Richtung (V) translatorisch in Bezug auf eine feste Auflage (33) montiert ist.

5. Vorrichtung (23) nach Anspruch 4, **dadurch gekennzeichnet, dass** der Träger (29) ein Rändelrad (37) zum Einstellen der Position der senkrechten Strebe (31) in Bezug auf die Auflage (33) entlang der vertikalen Richtung (V) aufweist.

6. Vorrichtung (23) nach Anspruch 5, **dadurch gekennzeichnet, dass** der Träger (29) einen Bremshebel (39) aufweist, dessen Klemmung geeignet ist, die Blockierung der Position der senkrechten Strebe (31) in Bezug auf die Auflage (33) in der vertikalen Richtung (V) zu gewährleisten.

7. Vorrichtung (23) nach einem der Ansprüche 3 bis 6, **dadurch gekennzeichnet, dass** die Querstrebe (32) in Bezug auf die senkrechten Strebe (31) in einer Querrichtung (T) translatorisch angebracht ist.

8. Vorrichtung (23) nach einem der Ansprüche 3 bis 7, **dadurch gekennzeichnet, dass** die Querstrebe (32) in Bezug auf die senkrechten Strebe (31) in einer Längsrichtung (L) translatorisch angebracht ist.

9. Vorrichtung (23) nach den Ansprüchen 7 und 8 in Kombination, **dadurch gekennzeichnet, dass** der Träger (29) einen Schieber (40) aufweist, der in Bezug auf die senkrechten Strebe (31) in der Querrichtung (T) verschiebbar angebracht ist, und dass die Querstrebe (32) in Bezug auf den Schieber (40) in der Längsrichtung (L) verschiebbar angebracht ist.

10. Vorrichtung (23) nach Anspruch 7 oder Anspruch 9, **dadurch gekennzeichnet, dass** der Träger (29) ein Rändelrad (41) zum Einstellen der Position der Querstrebe (32) in Bezug auf die senkrechten Strebe (31) entlang der Querrichtung (T) aufweist; wobei der Träger (29) vorzugsweise einen Bremshebel (43) aufweist, dessen Klemmung geeignet ist, die Blockierung der Position der Querstrebe (32) in der Querrichtung (T) zu gewährleisten.

11. Vorrichtung (23) nach einem der Ansprüche 2 bis 10, **dadurch gekennzeichnet, dass** der Träger (29) mindestens einen Indikator (38, 42) für die Position des optischen Blocks (24) aufweist.

12. Vorrichtung (23) nach einem der vorhergehenden Ansprüche, **dadurch gekennzeichnet, dass** der optische Block (24) in der Verlängerung des Wegs (TR) positioniert ist, wobei das Ziel (26) vorzugsweise gegenüber dem optischen Block (24) positioniert ist.

13. Vorrichtung (23) nach Anspruch 12, **dadurch gekennzeichnet, dass** der optische Block (24) jenseits des Austrittspunkts (S) oder des Eintrittspunkts (E) positioniert ist; wobei das Ziel (26) vorzugsweise gegenüber dem optischen Block (24) jenseits des Eintrittspunkts (E) bzw. des Austrittspunkts (S) positioniert ist.

14. Vorrichtung (23) nach einem der vorhergehenden Ansprüche, **dadurch gekennzeichnet, dass** das Ziel (26) einen Reflektor (27) aufweist, der mit Prismen ausgekleidet ist;
und/oder das Ziel (26) einstellbar an einem Fuß (46) angebracht ist;
und/oder die Vorrichtung Folgendes aufweist, um auf zwei geradlinigen Wegen (TR) einen Form- oder Positionsfehler eines Hohlkörpers (2), der mindestens einen dieser Wege (TR) durchläuft, zu erfassen:
- einen zweiten optischen Block (24), der einen Sender integriert, der einen optischen Strahl (25) entlang eines zweiten optischen Wegs erzeugt, von dem mindestens ein Segment parallel zu einem zweiten Weg (TR) ausgerichtet ist;
- ein zweites Ziel (26), das in einem Abstand vom ersten optischen Block (24) positioniert ist, wobei dieses erste Ziel (26) mit einem lichtempfindlichen Sensor oder einem Reflektor (27) versehen ist, der den zweiten optischen Weg abfängt;
und/oder der optische Block (24) seitlich vom Weg (TR) versetzt ist und die Vorrichtung (23) eine optische Winkelverschiebung aufweist, die so positioniert ist, dass sie das optische Wegsegment parallel zum Weg (TR) ausrichtet;
und/oder der optische Block (24) einen optischen Bandpassfilter integriert, der eine Bandbreite hat, die auf eine vorbestimmte Wellenlänge zentriert ist;
und/oder der Sender einen Laserstrahl (25) erzeugt.

15. Förderer (1) einer thermischen Aufbereitungsanlage (7) zum Transport von Hohlkörpern (2), ausgestattet mit einer Vorrichtung (23) zur Erfassung nach einem der vorhergehenden Ansprüche.

## Claims

1. Device (23) for detecting a shape or positioning defect of a hollow body (2) for a unit (7) for thermal conditioning of the hollow body, also known as an oven, the unit (7) comprising one or more radiating walls (8) and a conveyor (1) of the hollow bodies (2) defining at least one rectilinear path (TR), the hollow bodies following the rectilinear path (TR) between an entry point (E) and an exit point (S) of the thermal conditioning unit (7) and each having a main axis (X), the device (23) comprising:
- an optical block (24) incorporating an emitter producing an optical beam (25) positioned between the wall of the hollow body (2) and the radiating wall (8) along an optical pathway of which one segment is oriented parallel to the rectilinear path (TR) and offset laterally, with respect to a median plane (M) swept along by the main axes (X) of the nominally positioned hollow bodies (2), by a distance (D) greater than a half-width (R) of the hollow bodies (2) and less than twice the width (R) of the hollow bodies (2);
- a target (26) positioned at a distance from the optical block (24), this target (26) being provided with a photosensitive sensor or a reflector (27) intercepting the optical pathway of the beam (25) and suitable, respectively, for detecting the impact thereof or for reflecting it towards an optical receiver incorporated in the optical block (24) such that, when a hollow body (2) has a shape or positioning defect, it is interposed on the optical pathway between the optical block (24) and the target (26) and is struck by the optical beam (25) between the wall of the hollow body (2) and the radiating wall (8), resulting in detection of the shape or positioning defect.

2. Device (23) according to Claim 1, **characterized in that** the optical block (24) is mounted on an adjustable support (29).

3. Device (23) according to Claim 2, **characterized in that** the support (29) comprises a bracket (30) including an upright (31) and a crossmember (32) fastened to the upright (31) and on which the optical block (24) is mounted.

4. Device (23) according to Claim 3, **characterized in that** the upright (31) is mounted for translational movement, in a vertical direction (V), with respect to a fixed fixture (33).

5. Device (23) according to Claim 4, **characterized in that** the support (29) comprises an adjustment wheel (37) for adjusting the position of the upright (31) with respect to the fixture (33) in the vertical direction (V).

6. Device (23) according to Claim 5, **characterized in that** the support (29) comprises a brake lever (39) of which the clamping is suitable for blocking the upright (31) in position with respect to the fixture (33) in the vertical direction (V).

7. Device (23) according to one of Claims 3 to 6, **characterized in that** the crossmember (32) is mounted for translational movement, with respect to the upright (31), in a transverse direction (T).

8. Device (23) according to one of Claims 3 to 7, **characterized in that** the crossmember (32) is mounted for translational movement, with respect to the upright (31), in a longitudinal direction (L).

9. Device (23) according to Claims 7 and 8, taken in combination, **characterized in that** the support (29) comprises a slider (40) mounted for translational movement, with respect to the upright (31), in the transverse direction (T), and **in that** the crossmember (32) is mounted for translational movement, with respect to the slider (40), in the longitudinal direction (L).

10. Device (23) according to Claim 7 or Claim 9, **characterized in that** the support (29) comprises an adjustment wheel (41) for adjusting the position of the crossmember (32) with respect to the upright (31), in the transverse direction (T); the support (29) preferably comprising a brake lever (43) of which the clamping is suitable for blocking the crossmember (32) in position in the transverse direction (T).

11. Device (23) according to one of Claims 2 to 10, **characterized in that** the support (29) comprises at least one indicator (38, 42) of the position of the optical block (24).

12. Device (23) according to one of the preceding claims, **characterized in that** the optical block (24) is positioned in the extension of the path (TR), the target (26) preferably being positioned facing the optical block (24).

13. Device (23) according to Claim 12, **characterized in that** the optical block (24) is positioned beyond the exit point (S) or the entry point (E); the target (26) preferably being positioned facing the optical block (24) beyond the entry point (E) or, respectively, the exit point (S).

14. Device (23) according to one of the preceding claims, **characterized in that** the target (26) comprises a reflector (27) covered with prisms;
and/or the target (26) is mounted in an adjustable manner on a foot (46);
and/or the device comprises, for the detection, on two rectilinear paths (TR), of a shape or positioning defect of a hollow body (2) following at least one of these paths (TR):
- a second optical block (24) incorporating an emitter producing an optical beam (25) along a second optical pathway of which at least one segment is oriented parallel to a second path (TR);
- a second target (26) positioned at a distance from the first optical block (24), this first target (26) being provided with a photosensitive sensor or a reflector (27) intercepting the second optical pathway;
and/or the optical block (24) is laterally offset from the path (TR), and the device (23) comprises an optical angle deflector positioned to orient the optical pathway segment parallel to the path (TR);
and/or the optical block (24) incorporates an optical bandpass filter having a bandwidth centred on a predetermined wavelength;
and/or the emitter produces a laser beam (25).

15. Conveyor (1) of a thermal conditioning unit (7) for transporting hollow bodies (2), equipped with a detection device (23) according to one of the preceding claims.
